# EUROPÄISCHE PATENTSCHRIFT

(11) **EP 3 140 682 B1**
(45) Veröffentlichungstag und Bekanntmachung des Hinweises auf die Patenterteilung: **02.03.2022**
(21) Anmeldenummer: 15714507.9
(22) Anmeldetag: 07.04.2015
(51) Int. Cl.: G02B 5/02, G02B 5/22, G02F 1/35

(54) **VERFAHREN ZUR BEGRENZUNG EINER OPTISCHEN LEISTUNG, LEISTUNGSBEGRENZER UND DAMIT AUSGESTATTETES GERÄT**
METHOD FOR LIMITING OPTICAL POWER, POWER LIMITER AND APPARATUS EQUIPPED THEREWITH
PROCÉDÉ DE LIMITATION D'UNE PUISSANCE OPTIQUE, LIMITEUR DE PUISSANCE ET DISPOSITIF EQUIPÉ D'UN TEL LIMITEUR

(43) Veröffentlichungstag der Anmeldung: 15.03.2017
(73) Patentinhaber: Fraunhofer-Gesellschaft zur Förderung der angewandten Forschung e.V., 80686 München (DE); French-German Research Institute Of Saint-Louis, 68301 Saint-Louis (FR)
(72) Erfinder: DENGLER, Stefanie, 71032 Böblingen (DE); HEGE, Cordula, 76275 Ettlingen (DE); EBERLE, Bernd, 78462 Konstanz (DE); MULLER, Olivier, F-68610 Lautenbach (FR)
(74) Vertreter: Friese Goeden Patentanwälte PartGmbB
(86) Internationale Anmeldenummer: PCT/EP2015/057506
(87) Internationale Veröffentlichungsnummer: WO 2016/162050

(56) Entgegenhaltungen:
- EP-A1- 1 619 524
- WO-A1-2010/104600
- DE-A1-102013 201 139
- DE-U1-202010 002 568
- NAN HE ET AL: "Preparation and optical limiting properties of multiwalled carbon nanotubes with pi-conjugated metal-free phthalocyanine moieties", JOURNAL OF PHYSICAL CHEMISTRY, AMERICAN CHEMICAL SOCIETY, US, Bd. 113, Nr. 30, 1. Januar 2009 (2009-01-01), Seiten 13029-13035, XP002620311, ISSN: 0022-3654, DOI: 10.1021/JP9006813 [gefunden am 2009-07-08]

## Beschreibung

Die Erfindung betrifft einen optischen Leistungsbegrenzer, welcher eine nichtlineare Dämpfung aufweist. Weiterhin betrifft die Erfindung ein Verfahren zur Begrenzung einer optischen Leistung, bei welchem Licht von einem Leistungsbegrenzer abgeschwächt wird. Vorrichtungen und Verfahren dieser Art können zum Schutz elektronischer Bildsensoren oder des menschlichen Auges verwendet werden.

Der Einsatz von verschiedenen Laserquellen nimmt stetig zu, beispielsweise für industrielle Anwendungen oder in der Medizintechnik. Hierdurch steigt das Gefährdungspotenzial sowohl für das menschliche Auge, als auch für abbildende oder nicht abbildende Sensoren. Sofern die Wellenlänge der Laserstrahlung bekannt ist, kann mittels eines schmalbandigen Filters ein hinreichender Schutz erzielt werden. Sofern jedoch unterschiedliche Laser unterschiedlicher Wellenlänge zum Einsatz kommen oder die Wellenlänge eintreffender Laserstrahlung nicht im Voraus bekannt ist, bieten solche konventionellen Schutzkonzepte keinen ausreichenden Schutz.

Aus L. Weber Tutt und T. F. Boggess: "A Review of Optical Limiting Mechanisms and Devices Using Organics, Fullerenes, Semiconductors and Other Materials", Prog. Quant. Electr., 1993, 17, 2099 sind breitbandige optische Leistungsbegrenzer bekannt, welche eine nichtlineare optische Absorption aufweisen. Hierdurch nimmt die Transmission mit zunehmender Energiedichte der eintreffenden Laserstrahlung ab. Somit kann bei geringer Intensität eine hohe Transmission realisiert werden, welche die Leistung eines Sensors bzw. eine optische Abbildung nur im geringen Maße beeinträchtigt.

Bei Eintreffen einer gefährlich hohen Intensität steigt die Dämpfung an, sodass die auf den Sensor bzw. das Auge einwirkende Intensität unterhalb eines kritischen Grenzwertes bleibt.

Optische Geräte mit nichtlinearen Leistungsbegrenzern sind weiterhin aus den Offenbarungen der DE 20 0210 002568 U1 und DE 10 2013 201139 A1 bekannt.

Keines der bisher der bekannten Materialien erfüllt jedoch alle Anforderungen an solche Leistungsbegrenzer, nämlich hohe nichtlineare Dämpfung, niedrige nichtlineare Schwelle, breitbandige Wirkung, Farbneutralität und hohe lineare Transmission.

Ausgehend vom Stand der Technik liegt der Erfindung somit die Aufgabe zugrunde, einen optischen Leistungsbegrenzer mit verbesserter Wirkung anzugeben.

Die Aufgabe wird erfindungsgemäß durch ein optisches Gerät gemäß Anspruch 1 und ein Verfahren gemäß Anspruch 11 gelöst.

Erfindungsgemäß wird ein optisches Gerät mit zumindest einer ersten Sammellinse und zumindest einer zweiten Sammellinse und einem optischen Leistungsbegrenzer mit einer nichtlinearen Dämpfung vorgeschlagen und ist in einem Zwischenfokus zwischen den beiden Linsen angeordnet . Der Leistungsbegrenzer enthält Carbon-Nanohorns (CNH). Die erfindungsgemäß verwendeten CNH enthalten graphitisch gebundenen, sp²-hybridisierten Kohlenstoff. Die Kohlenstoffatome bilden Tuben mit einem ersten Ende und einem zweiten Ende. Die CNH laufen am zweiten Ende konisch zu und können am zweiten Ende geschlossen sein. Der Öffnungswinkel des Konus am zweiten Ende kann zwischen etwa 15° und etwa 25° betragen. In einigen Ausführungsformen der Erfindung kann der Öffnungswinkel etwa 20° betragen. In einigen Ausführungsformen der Erfindung enthält die Wandung der CNH nur eine einzige Atomlage. Dies führt zur Quantisierung elektronischer Zustände, wie dies bereits von Carbon-Nanotubes (CNT) bekannt ist.

In einigen Ausführungsformen der Erfindung können einzelne CNH einen Durchmesser von etwa 1 nm bis etwa 15 nm aufweisen. In anderen Ausführungsformen kann der Durchmesser zwischen etwa 2 nm und etwa 10 nm betragen. In einigen Ausführungsformen der Erfindung kann die Länge eines der CNH zwischen etwa 20 nm und etwa 300 nm betragen. In anderen Ausführungsformen der Erfindung kann die Länge zwischen etwa 50 nm und etwa 100 nm betragen.

In einigen Ausführungsformen der Erfindung können die CNH Aggregate bilden, welche eine Mehrzahl von CNH enthalten. Die Aggregate können einen Durchmesser von etwa 100 nm bis etwa 1000 nm oder einen Durchmesser von etwa 200 nm bis etwa 500 nm aufweisen.

In einigen Ausführungsformen der Erfindung sind die CNH bzw. die Aggregate der CNH in ein Trägermaterial eingebettet, welches in zumindest einem Teilbereich des elektromagnetischen Spektrums transparent ist. Somit kann die Nutzstrahlung das Trägermaterial nahezu ungehindert passieren. In einigen Ausführungsformen der Erfindung kann die Dämpfung im Trägermaterial in zumindest einem Spektralbereich weniger als etwa 10% oder weniger als etwa 5% oder weniger als etwa 2% betragen. Dementsprechend ist die Transmission größer als 90%, größer als 95% oder größer als 98%. Das Trägermaterial kann eine planparallele Platte sein, welche die optischen Eigenschaften eines optischen Gerätes nicht oder nur in geringem Umfang beeinflusst.

In einigen Ausführungsformen der Erfindung sind die CNH als Beschichtung auf ein Trägermaterial aufgebracht, welches in zumindest einem Teilbereich des elektromagnetischen Spektrums transparent ist. Somit kann die Nutzstrahlung durch das Trägermaterial nahezu ungehindert passieren. In einigen Ausführungsformen der Erfindung kann die Dämpfung im Trägermaterial in zumindest einem Spektralbereich weniger als etwa 10% oder weniger als etwa 5% oder weniger als etwa 2% betragen. Das Trägermaterial kann eine planparallele Platte sein, welche die optischen Eigenschaften eines optischen Gerätes nicht oder nur in geringem Umfang beeinflusst. In anderen Ausführungsformen der Erfindung kann das Trägermaterial eine Linse, ein Spiegel oder eine andere optische Komponente sein, so dass der Leistungsbegrenzer einfach in ein Objektiv, ein Fernglas oder ein anderes optisches Gerät integrierbar ist.

Aufgrund der nichtlinearen Dämpfung durch die CNH kann Strahlung geringer Intensität den Leistungsbegrenzer nahezu unbeeinflusst passieren. Der Benutzer einer solchen Schutzvorrichtung bzw. eines mit der Schutzvorrichtung ausgestatteten Gerätes wird die Anwesenheit der CNH daher normalerweise nicht oder nur unwesentlich wahrnehmen. Bei Eintreffen einer hohen Intensität, beispielsweise direkte Laserstrahlung, welche zur Zerstörung eines Bildsensors oder des menschlichen Auges führen würde, steigt die Dämpfung der CNH aufgrund der nichtlinearen Absorption und/oder durch Streuung des eintreffenden Lichtes an, sodass die transmittierte Leistung unterhalb eines Grenzwertes bleibt. Unter einer hohen Intensität soll für die Zwecke der vorliegenden Erfindung eine Lichtintensität oberhalb der nichtlinearen Schwelle des verwendeten Leistungsbegrenzers, gemessen am Ort des Leistungsbegrenzers, verstanden werden. Die nichtlineare Schwelle kann von der Wellenlänge abhängig sein, d.h. unterschiedliche Wellenlängen weisen unterschiedliche nichtlineare Schwellen auf. Für die Zwecke der vorliegenden Erfindung soll die nichtlineare Schwelle diejenige Intensität sein, bei welcher die Transmission durch den Leistungsbegrenzer bei zunehmender Intensität auf die Hälfte des Ursprungswertes abgefallen ist.

In einigen Ausführungsformen der Erfindung kann das Trägermaterial Teilbereiche des elektromagnetischen Spektrums absorbieren oder reflektieren. Beispielsweise kann zum Schutz des menschlichen Auges der infrarote Spektralanteil dauerhaft und unabhängig von dessen Intensität im Trägermaterial des Leistungsbegrenzers abgeschwächt werden. Hierdurch wird der Farbeindruck der beobachteten Szene nicht beeinflusst, da das sichtbare Spektrum das Trägermaterial weiter ungehindert passieren kann. Bei Eintreffen einer unzulässig hohen Intensität im infraroten Spektralbereich, wird diese weiterhin durch die Filterwirkung des Trägermaterials abgeschwächt. Bei Eintreffen einer unzulässig hohen Intensität im sichtbaren Spektralbereich kommt die nichtlineare Dämpfung der CNH zum tragen. Auf diese Weise ist der Benutzer des Leistungsbegrenzers in allen Wellenlängenbereichen vor Schädigung durch Laserstrahlung geschützt. In gleicher Weise, wie vorstehend anhand des infraroten Spektralbereichs erläutert, kann der Schutz auch auf andere Spektralbereiche ausgedehnt werden. Beispielsweise kann das Trägermaterial auch im ultravioletten Spektralbereich absorbieren. Zum Schutz eines Infrarotsensors kann das Trägermaterial im sichtbaren und/oder ultravioletten Spektralbereich absorbieren, sodass die nichtlineare Dämpfung der CNH das Transmissionsverhalten des Leistungsbegrenzers nur im infraroten Spektralbereich dominiert.

In einigen Ausführungsformen der Erfindung kann das Trägermaterial ein Polymer oder ein Duroplast und/oder ein Glas und/oder Quarz und/oder eine Silicaverbindung und/oder eine Flüssigkeit sein oder eine solche enthalten. Ein flüssiges Trägermaterial weist dabei den Vorteil auf, dass der Leistungsbegrenzer auch nach Dämpfung sehr großer optischer Leistungen eine Selbstheilung zeigt. Zum einen können beschädigte CNH durch Diffusion vom Ort der Schädigung entfernt werden. Ungeschädigte CNH, welche zuvor keine hohe Strahlungsleistung absorbieren mussten, können durch Diffusion an den Ort der Strahlungseinwirkung gelangen. In einigen Ausführungsformen der Erfindung kann die Flüssigkeit mit den CNH zusätzlich durch eine Fördereinrichtung umgewälzt werden, sodass beschädigte CNH stets aus dem Leistungsbegrenzer entfernt und durch neues Material ersetzt werden. In einigen Ausführungsformen der Erfindung kann das Trägermaterial als mehrschichtiges Material aufgebaut sein und beispielsweise Hydroxyethylmethacrylat auf Quarz enthalten oder daraus bestehen.

Sofern das Trägermaterial ein Polymer oder ein Duroplast ist oder ein solches enthält, können CNH in der unpolymerisierten Flüssigkeit dispergiert werden. Durch polymerisieren des Monomers zum Polymer, beispielsweise durch Zufügen eines Radikalstarters, werden die CNH im Trägermaterial festgelegt bzw. örtlich lokalisiert. In einigen Ausführungsformen der Erfindung weist dieses Herstellungsverfahren den Vorteil auf, dass die CNH bzw. die Aggregate der CNH in der Flüssigkeit fein dispergiert werden können und nur im geringen Umfang größere Agglomerate bilden, welche ein anderes Dämpfungsverhalten aufweisen könnten.

In gleicher Weise kann ein Leistungsbegrenzer hergestellt werden, indem CNH oder deren Aggregate in einer Glasschmelze dispergiert werden. Dadurch ergibt sich nach Abkühlen des Glases ein haltbarer und chemisch inerter Leistungsbegrenzer, welcher auch in aggressiven Umgebungen eingesetzt werden kann.

Ein Polymer oder ein Duroplast kann in einigen Ausführungsformen der Erfindung gewählt sein aus Polymethylacrylat und/oder Hydroxyethylmethacrylat und/oder Polycarbonat und/oder Polyester und/oder Polyphosphorester. Diese Materialien sind einfach herstellbar und CNH oder deren Aggregate lassen sich gut in diese Materialien dispergieren. In einigen Ausführungsformen der Erfindung kann das Trägermaterial ein Kunstharz enthalten, beispielsweise ein Epoxidharz, ein Phenolharz oder ein Polyesterharz. Sofern das Trägermaterial eine Flüssigkeit enthält, kann diese ausgewählt sein aus Wasser oder Aceton oder einem Alkohol oder einem kohlenwasserstoffhaltigen Lösemittel, beispielsweise Toluol. Wahlweise können auch Mischungen dieser Flüssigkeiten zum Einsatz kommen. In einigen Ausführungsformen der Erfindung können die CNH oder deren Aggregate in zumindest einem Methylacrylat und/oder Carbonat und/oder Ester und/oder Phosphorester dispergiert werden.

In einigen Ausführungsformen der Erfindung kann der Leistungsbegrenzer zusätzlich einen Farbstoff und/oder Nanopartikel enthalten. In einigen Ausführungsformen der Erfindung können die Nanopartikel oder der Farbstoff dazu eingesetzt werden, die CNH zu funktionalisieren. Hierdurch kann die Dämpfung der CNH ansteigen, die nichtlineare Schwelle sinken und/oder eine breitbandigere Schutzwirkung erzielt werden.

In einigen Ausführungsformen der Erfindung kann der Farbstoff ausgewählt sein aus einem oder mehreren Porphyrinen und/oder Phthalocyaninen und/oder Stilbenen. In anderen Ausführungsformen der Erfindung kann der Farbstoff Nanopartikel enthalten oder daraus bestehen, welche zumindest ein Metall oder zumindest einen Halbleiter enthalten. In wiederum anderen Ausführungsformen der Erfindung können die Nanopartikel zumindest Gold und/oder Silber und/oder Kupfer und/oder Galliumarsenid und/oder Zinkselenid enthalten. Diese Farbstoffe können in einigen Ausführungsformen der Erfindung als UV-Farbstoff wirken, welche im sichtbaren Spektralbereich transparent sind, jedoch bei höheren Intensitäten eine 2- oder Mehr-Photonenabsorption zeigen. In einigen Ausführungsformen der Erfindung kann eine Mehrzahl von Farbstoffen eingesetzt werden.

In einigen Ausführungsformen der Erfindung kann der Leistungsbegrenzer bei einer Wellenlänge von 532 nm eine nichtlineare Schwelle von etwa 0,02 µJ bis etwa 2 µJ oder von etwa 0,03 µJ bis etwa 0,2 µJ oder von etwa 0,04 µJ bis etwa 0,1 µJ aufweisen. In einigen Ausführungsformen der Erfindung kann der Leistungsbegrenzer bei einer Wellenlänge von 1064 nm eine nichtlineare Schwelle von etwa 0,1 µJ bis etwa 10 µJ oder von 0,15 µJ bis etwa 1 µJ oder von 0,2 µJ bis etwa 0,5 µJ aufweisen. Zur Bestimmung der nichtlinearen Schwelle wird ein Leistungsbegrenzer mit einer linearen Transmission von etwa 70% im Zwischenfokus eines Linsensystems angeordnet. Die Blendenzahl weist etwa den Wert 5 auf. Die Blendenzahl bezeichnet dabei den Quotient aus Brennweite und Apertur der fokussierenden Linse bzw. des Linsensystems. Die nichtlineare Schwelle ist derjenige Wert, bei welchem die Transmission auf 50% des Ausgangswertes abgefallen ist.

In einigen Ausführungsformen der Erfindung kann der Leistungsbegrenzer bei einer Bestrahlung mit mehr als 1 J·cm⁻² zerstört werden. Hierdurch kann bei Auftreffen einer entsprechend großen optischen Leistung die Transmission zuverlässig reduziert werden.

In einigen Ausführungsformen der Erfindung kann der vorgeschlagene Leistungsbegrenzer im Zwischenfokus einer optischen Abbildung angeordnet sein. Hierdurch wird die Leistungsdichte im Leistungsbegrenzer erhöht, sodass bei geringeren einfallenden Intensität bereits eine nichtlineare Dämpfung auftritt. Dadurch kann die nichtlineare Schwelle bzw. das Einsetzen der Schutzwirkung zu niedrigeren Leistungsdichten bzw. Intensitäten verschoben sein.

In einigen Ausführungsformen der Erfindung kann der vorgeschlagene Leistungsbegrenzer eine Dicke von etwa 1 mm bis etwa 3 mm aufweisen. In einigen Ausführungsformen der Erfindung kann der vorgeschlagene Leistungsbegrenzer eine Dicke von etwa 1,5 mm bis etwa 2,5 mm aufweisen. In einigen Ausführungsformen der Erfindung kann der vorgeschlagene Leistungsbegrenzer eine Dicke von etwa 2 mm aufweisen.

In einigen Ausführungsformen der Erfindung kann der vorgeschlagene Leistungsbegrenzer CNH oder Aggregate von CNH in einer Konzentration bzw. Flächenbelegung aufweisen, welche unterhalb der nichtlinearen Schwelle im Wellenlängenbereich zwischen 400 nm und 800 nm eine mittlere Transmission von mehr als etwa 60% oder mehr als etwa 70% oder mehr als etwa 80% bewirkt. Als Flächenbelegung wird dabei die über den Strahlengang des Lichtes integrierte Volumenkonzentration bezeichnet. Eine Flächenbelegung kann daher auch bei Leistungsbegrenzern größerer Dicke angegeben werden.

Nachfolgend soll die Erfindung anhand von Figuren ohne Beschränkung des allgemeinen Erfindungsgedankens näher erläutert werden. Dabei zeigt
- Figur 1: eine schematische Darstellung eines optischen Gerätes mit einem erfindungsgemäßen Leistungsbegrenzer.
- Figur 2: zeigt einen Leistungsbegrenzer in einer ersten Ausführungsform.
- Figur 3: zeigt einen Leistungsbegrenzer in einer zweiten Ausführungsform.
- Figur 4: zeigt das Transmissionsverhalten einer Ausführungsform eines erfindungsgemäßen Leistungsbegrenzers im sichtbaren Spektralbereich und
- Figur 5: zeigt das Transmissionsverhalten einer Ausführungsform eines erfindungsgemäßen Leistungsbegrenzers im infraroten Spektralbereich.

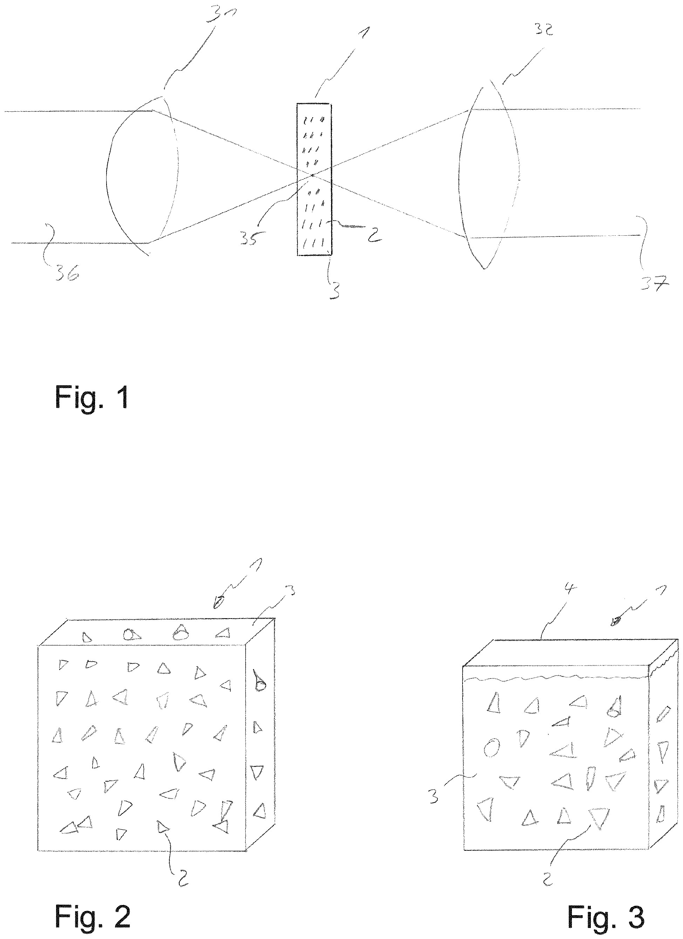

Figur 1 zeigt einen optischen Leistungsbegrenzer 1. Der Leistungsbegrenzer 1 enthält zumindest ein Trägermaterial 3 sowie Aggregate von CNH 2. Die Dichte der CNH bzw. der Aggregate von CNH ist so gewählt, dass unterhalb der nichtlinearen Schwelle im Wellenlängenbereich zwischen 400 nm und 800 nm eine mittlere Transmission von mehr als etwa 70% oder mehr als etwa 80% vorhanden ist.

Der Leistungsbegrenzer 1 ist im Zwischenfokus 35 eines optischen Gerätes angeordnet. Im dargestellten Ausführungsbeispiel enthalt das optische Gerät lediglich zwei Linsen 31 und 32. Selbstverständlich kann der Leistungsbegrenzer auch in aufwändigeren optischen Geräten eingesetzt werden. Insbesondere kann jede der Linsen 31 und 32 durch ein Linsensystem aus mehreren Sammel- und/oder Zerstreuungslinsen ersetzt werden. Das optische Gerät kann daher beispielsweise ein an sich bekanntes Spektiv, ein Fernrohr, ein Fernglas, ein Objektiv, ein Entfernungsmesser oder ein weiteres, hier nicht genanntes Gerät sein. Die Anordnung des Leistungsbegrenzers 1 im Zwischenfokus 35 führt dazu, dass auf einer Teilfläche des Leistungsbegrenzers 1 eine höhere Lichtintensität vorhanden ist, sodass die Schutzwirkung des Leistungsbegrenzers bereits bei einer geringeren einfallenden Intensität 36 einsetzt.

Neben den in Figur 1 dargestellten Komponenten kann das optische Gerät weitere, an sich bekannte Bauteile aufweisen, beispielsweise Filter oder Blenden.

In einigen Ausführungsformen der Erfindung kann der Leistungsbegrenzer Teil einer Vorrichtung sein, welche zumindest ein selbstfokussierendes Element enthält. Beispielsweise kann eine Linse 31 durch zumindest ein selbstfokussierendes Element ersetzt werden. In einigen Ausführungsformen der Erfindung kann ein selbstfokussierendes Element mit zumindest einer Linse 31 kombiniert werden. Zumindest ein selbstfokussierendes Element kann mit dem Trägermaterial 3 mit den darin angeordneten CNH zu einer einzelnen Baugruppe vereinigt werden.

Am Ausgang 37 des optischen Gerätes kann ein digitaler Bildsensor vorhanden sein, beispielsweise eine CCD-Kamera. In anderen Ausführungsformen der Erfindung kann am Ausgang 37 ein nicht abbildender Sensor vorhanden sein, beispielsweise eine Photodiode. In weiteren Ausführungsformen der Erfindung kann am Ausgang 37 ein Okular angeordnet sein, sodass eine Szene von einem Beobachter unmittelbar wahrgenommen werden kann. In diesem Fall schützt der Leistungsbegrenzer das menschliche Auge vor unzulässig hoher optischer Leistung, welche zum Erblinden führen könnte.

Da die CNH 2 ein nichtlineares Dämpfungsverhalten aufweisen, werden geringe Intensitäten durch den Leistungsbegrenzer 1 transmittiert. Das Vorhandensein des Leistungsbegrenzers 1 beeinträchtigt daher die optische Qualität des Gerätes nicht oder nur unwesentlich. Bei Eintreffen einer größeren Leistung führt die ansteigende Intensität zu einer nichtlinearen Dämpfung der CNH 2, sodass die durch den Leistungsbegrenzer 1 transmittierte optische Leistung einen vorgebbaren Grenzwert nicht überschreiten kann. Bei weiterem Anstieg der optischen Leistung, kann der erfindungsgemäße Leistungsbegrenzer als Opferelement verwendet werden, d.h. durch Zerstörung des Trägermaterials und/oder der CNH wird die Transmission dauerhaft herabgesetzt.

Figur 2 zeigt ein Ausführungsbeispiel eines Leistungsbegrenzers 1. Der Leistungsbegrenzer 1 enthält ein Trägermaterial, beispielsweise ein Polymer, ein Duroplast oder ein Glas. Im Trägermaterial 3 sind CNH 2 eingebettet. Die CNH 2 können in das verflüssigte Trägermaterial 3 eingebracht werden, beispielsweise eine Lösung von Monomeren. Beispielsweise kann das verflüssigte Trägermaterial Methacrylsäuremethylester enthalten. Durch Rühren können die CNH im Methacrylsäuremethylester dispergiert werden, wobei Agglomerate aufgelöst werden können. Nach Zugabe von Dibenzoylperoxid als Radikalstarter wird der Methacrylsäuremethylester zu Polymethylmethacrylat (PMMA) polymerisiert. Nach vollständiger Polymerisation liegt das Trägermaterial 3 als Festkörper vor. Optional können die Lichteintritts- und -austrittsflächen poliert oder vergütet werden, um die optische Qualität in an sich bekannter Weise zu verbessern. Der Leistungsbegrenzer kann als planparallele Platte mit runder oder eckiger Grundform ausgeführt sein.

In gleicher Weise wie vorstehend für PMMA erläutert, kann die Erfindung auch mit anderen Polymeren oder Duroplasten umgesetzt werden.

In einigen Ausführungsformen der Erfindung können CNH 2 auch als Beschichtung auf einem Träger 3 aufgebracht werden. Eine solche Beschichtung kann eine Dicke von etwa 25 µm bis etwa 500 µm aufweisen. Das Beschichtungsmaterial kann ein Duroplast enthalten, beispielsweise ein Epoxidharz oder einen Polyurethanlack. Die Beschichtung kann in an sich bekannter Weise durch Streichen, Spritzen, Aufrakeln, oder Spincoating erfolgen.

Anhand von Figur 3 wird eine weitere Ausführungsform des erfindungsgemäßen Leistungsbegrenzers 1 erläutert. Der Leistungsbegrenzer 1 enthält CNH 2, welche in einem flüssigen Trägermaterial 3 dispergiert sind. Das Trägermaterial 3 kann in einigen Ausführungsformen der Erfindung Wasser oder Aceton oder einen Alkohol enthalten. Das Trägermaterial 3 ist in einem Behälter 4 aufgenommen, welcher zumindest Teilflächen aufweist, welche für die hindurchtretende elektromagnetische Strahlung zumindest teilweise transparent sind. Die in Figur 3 dargestellte Ausführungsform weist den Vorteil auf, dass der Leistungsbegrenzer selbstheilend ist, falls eine hohe optische Leistung auf den Leistungsbegrenzer trifft und zumindest ein Teil der CNH im Fokuspunkt durch die eintreffende Strahlungsenergie zerstört werden. In diesem Fall diffundieren die zerstörten CNH aus dem Fokuspunkt, wobei CNH aus dem Randbereich des Absorbers, welche bislang nicht bestrahlt wurden, in den Fokuspunkt diffundieren können.

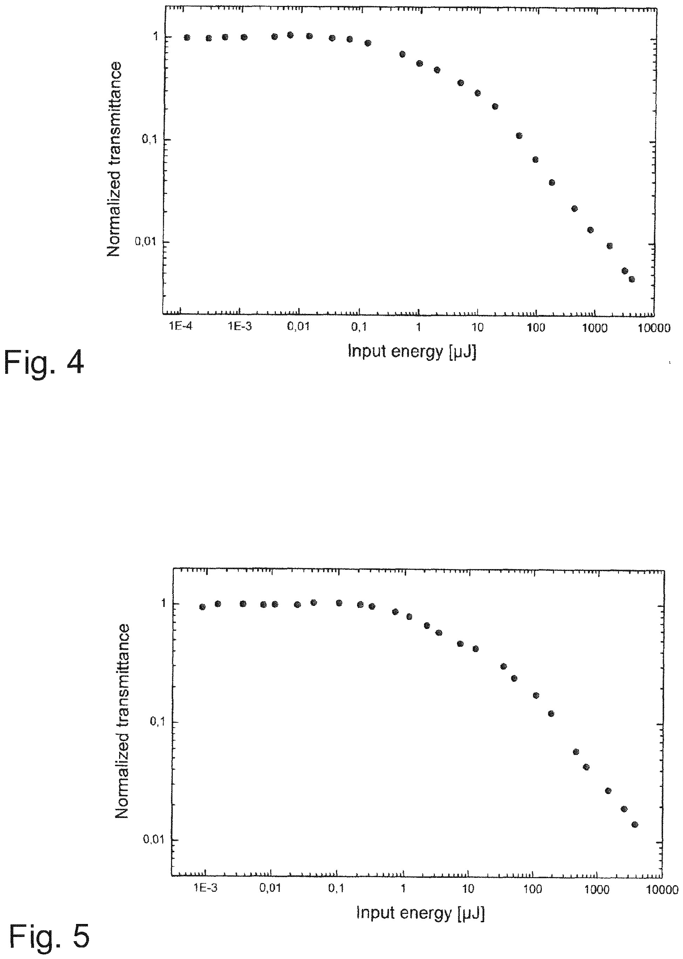

Anhand der Figuren 4 und 5 wird das Transmissionsverhalten eines Ausführungsbeispiels des erfindungsgemäßen Leistungsbegrenzers gegen die eingestrahlte optische Leistung erläutert. Dabei zeigt Figur 4 die Transmission für eine Wellenlänge von 532 nm und Figur 5 zeigt die Transmission für eine Wellenlänge von 1064 nm. Der Leistungsbegrenzer enthält jeweils Aggregate von CNH, welche in einer Konzentration in Aceton dispergiert sind, bei welcher sich etwa 70% Transmission bei linearer Dämpfung ergeben. Die Schichtdicke beträgt etwa 2 mm.

Für die Zwecke der vorliegenden Erfindung soll die nichtlineare Schwelle als diejenige Stelle definiert sein, an welcher die Transmission auf 50 % des Ursprungswerts abgefallen ist.

Wie Figur 4 und Figur 5 weiter zeigen, wurde die Transmission im linearen Bereich auf 1 normiert, so dass die Figuren nur die nichtlineare Absorption zeigen. Die Transmission ist in einem weiten Bereich nahezu konstant. Der erfindungsgemäße Leistungsbegrenzer führt zu einer nur geringfügigen Verringerung der Lichtstärke eines damit ausgestatteten optischen Gerätes. Jedoch nimmt die Transmission mit zunehmender Energie oberhalb der nichtlinearen Schwelle stark ab, sodass eine Schädigung des Benutzers oder von Bildsensoren zuverlässig vermieden wird.

Selbstverständlich ist die Erfindung nicht auf die in den Figuren dargestellte Ausführungsform beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Merkmale aus unterschiedlichen Ausführungsformen der Erfindung können jederzeit kombiniert werden, um so weitere Ausführungsformen der Erfindung zu erhalten.

## Patentansprüche

1. Optisches Gerät mit
zumindest einer ersten Sammellinse (31) und
zumindest einer zweiten Sammellinse (32) und
einem optischen Leistungsbegrenzer (1), welcher eine nichtlineare Dämpfung aufweist und Carbon-Nanohorns (2) enthält, wobei
der optischen Leistungsbegrenzer (1) in einem Zwischenfokus (35) zwischen der ersten Linse (31) und der zweiten Linse (32) angeordnet ist.

2. Optisches Gerät nach Anspruch 1, **dadurch gekennzeichnet, dass** die Carbon-Nanohorns (2) in einem Trägermaterial (3) eingebettet sind, welches in zumindest einem Teilbereich des elektromagnetischen Spektrums transparent ist oder dass die Carbon-Nanohorns (2) auf ein Trägermaterial (3) aufgebracht sind, welches in zumindest einem Teilbereich des elektromagnetischen Spektrums transparent ist.

3. Optisches Gerät nach Anspruch 2, **dadurch gekennzeichnet, dass** das Trägermaterial (3) ein Polymer oder ein Duroplast oder ein Glas oder eine Flüssigkeit enthält oder
dass das Trägermaterial (3) PMMA oder Polycarbonat oder oder Polyesther oder Kunstharz oder Wasser oder Aceton enthält.

4. Optisches Gerät nach einem der Ansprüche 1 bis 3, **dadurch gekennzeichnet, dass** die Carbon-Nanohorns (2) eine Länge von etwa 50 nm bis etwa 500 nm aufweisen und/oder dass die Carbon-Nanohorns (2) einen Durchmesser von etwa 10 nm bis etwa 50 nm aufweisen oder
dass die Carbon-Nanohorns (2) eine Länge von etwa 100 nm bis etwa 300 nm aufweisen und/oder
dass die Carbon-Nanohorns (2) einen Durchmesser von etwa 15 nm bis etwa 30 nm aufweisen.

5. Optisches Gerät nach einem der Ansprüche 1 bis 4, **dadurch gekennzeichnet, dass** die Carbon-Nanohorns (2) oder Aggregate der Carbon-Nanohorns (2) in einer Flächenbelegung vorhanden sind, welche unterhalb der nichtlinearen Schwelle im Wellenlängenbereich zwischen 400 nm und 800 nm eine mittlere Transmission von mehr als etwa 70% oder mehr als etwa 80% bewirkt.

6. Optisches Gerät nach einem der Ansprüche 1 bis 5, **dadurch gekennzeichnet, dass** der optische Leistungsbegrenzer (1) weiterhin zumindest einen Farbstoff und/oder Nanopartikel enthält.

7. Optisches Gerät nach Anspruch 6, **dadurch gekennzeichnet, dass** der Farbstoff ausgewählt ist aus einem oder mehreren Porphyrinen und/oder Phtalocyaninen und/oder Stilbenen und/oder
dass die Nanopartikel zumindest ein Metall oder zumindest einen Halbleiter enthalten und/oder
dass die Nanopartikel zumindest Gold und/oder Silber und/oder Kupfer und/oder Galliumarsenid und/oder Zinkselenid enthalten.

8. Optisches Gerät nach einem der Ansprüche 1 bis 7, **dadurch gekennzeichnet, dass** der optische Leistungsbegrenzer (1) bei einer Wellenlänge von 532 nm eine nichtlineare Schwelle von etwa 0,02 µJ bis etwa 2 µJ oder von etwa 0,03 µJ bis etwa 0,2 µJ oder von etwa 0,04 µJ bis etwa 0,1 µJ aufweist, wenn der Leistungsbegrenzer (1) im Zwischenfokus (35) eines Linsensystems (31, 32) mit Blendenzahl 5 angeordnet ist.

9. Optisches Gerät nach einem der Ansprüche 1 bis 8, **dadurch gekennzeichnet, dass** der optische Leistungsbegrenzer (1) bei einer Wellenlänge von 1064 nm eine nichtlineare Schwelle von etwa 0,1 µJ bis etwa 10 µJ oder von 0,15 µJ bis etwa 1 µJ oder von 0,2 µJ bis etwa 0,5 µJ aufweist, wenn der Leistungsbegrenzer (1) im Zwischenfokus (35) eines Linsensystems (31, 32) mit Blendenzahl 5 angeordnet ist.

10. Optisches Gerät nach einem der Ansprüche 1 bis 9, **dadurch gekennzeichnet, dass** zumindest eine der Linsen (31, 32) durch ein Linsensystem aus mehreren Sammel- und/oder Zerstreuungslinsen gebildet ist.

11. Verfahren zur Begrenzung einer optischen Leistung, bei welchem Licht von einem optischen Leistungsbegrenzer (1), welcher eine nichtlineare Dämpfung aufweist, abgeschwächt wird, **dadurch gekennzeichnet, dass** der Leistungsbegrenzer Carbon-Nanohorns enthält und im Zwischenfokus (35) zwischen einer ersten Sammellinse (31) und und einer zweiten Sammellinse (32) eines optischen Gerätes angeordnet ist.

12. Verfahren nach Anspruch 11, **dadurch gekennzeichnet, dass** Carbon-Nanohorns (2) oder Aggregate von Carbon-Nanohorns (2) in einer Flächenbelegung verwendet werden, welche unterhalb der nichtlinearen Schwelle im Wellenlängenbereich zwischen 400 nm und 800 nm eine mittlere Transmission von mehr als etwa 70% oder mehr als etwa 80% bewirkt.

13. Verfahren nach einem der Ansprüche 11 oder 12, **dadurch gekennzeichnet, dass** das Licht nichtlinear absorbiert und/oder gestreut wird.

14. Verfahren nach einem der Ansprüche 11 bis 13, **dadurch gekennzeichnet, dass** der Leistungsbegrenzer (1) bei Eintreffen einer optischen Energie von mehr als 1 J·cm⁻² zerstört wird.

## Claims

1. Optical apparatus comprising
at least one first converging lens (31) and
at least one second converging lens (32), and
an optical power limiter (1), which has nonlinear attenuation and contains carbon nanohorns (2), wherein
the optical power limiter (1) is arranged in an intermediate focus (35) between the first lens (31) and the second lens (32).

2. Optical apparatus according to claim 1, **characterized in that** the carbon nanohorns (2) are embedded in a carrier material (3), which is transparent in at least a portion of the electromagnetic spectrum or **in that** the carbon nanohorns (2) are applied to a carrier material (3), which is transparent in at least a portion of the electromagnetic spectrum.

3. Optical apparatus according to claim 2, **characterized in that** the carrier material (3) contains a polymer or a thermoset or a glass or a liquid, or
**in that** the carrier material (3) contains PMMA or polycarbonate or polyester or synthetic resin or water or acetone.

4. Optical apparatus according to any of claims 1 to 3, **characterized in that** the carbon nanohorns (2) have a length of about 50 nm to about 500 nm and/or
**in that** the carbon nanohorns (2) have a diameter of about 10 nm to about 50 nm, or
**in that** the carbon nanohorns (2) have a length of about 100 nm to about 300 nm and/or
**in that** the carbon nanohorns (2) have a diameter of about 15 nm to about 30 nm.

5. Optical apparatus according to any of claims 1 to 4, **characterized in that** the carbon nanohorns (2) or aggregates of the carbon nanohorns (2) are present in an area occupancy which, below the nonlinear threshold in the wavelength range between 400 nm and 800 nm, results in an average transmission of more than about 70% or more than about 80%.

6. Optical apparatus according to any of claims 1 to 5, **characterized in that** the optical power limiter (1) further contains at least one dye and/or nanoparticles.

7. Optical apparatus according to claim 6, **characterized in that** the dye is selected from one or more porphyrins and/or phthalocyanines and/or stilbenes and/or
**in that** the nanoparticles contain at least one metal or at least one semiconductor and/or
**in that** the nanoparticles contain at least gold and/or silver and/or copper and/or gallium arsenide and/or zinc selenide.

8. Optical device according to any of claims 1 to 7, **characterized in that**, at a wavelength of 532 nm, the optical power limiter (1) has a nonlinear threshold of about 0.02 µJ to about 2 µJ or of about 0.03 µJ to about 0.2 µJ or of about 0.04 µJ to about 0.1 µJ when the power limiter (1) is arranged in the intermediate focus (35) of a lens system (31, 32) having f-number 5.

9. Optical apparatus according to any of claims 1 to 8, **characterized in that**, at a wavelength 1064 nm, the optical power limiter (1) has a nonlinear threshold of about 0.1 µJ to about 10 µJ or of 0.15 µJ to about 1 µJ or of 0.2 µJ to about 0.5 µJ when the power limiter (1) is arranged in the intermediate focus (35) of a lens system (31, 32) having f-number 5.

10. Optical apparatus according to any of claims 1 to 9, **characterized in that** at least one of the lenses (31, 32) is formed by a lens system of a plurality of converging and/or diverging lenses.

11. Method for limiting an optical power, in which light is attenuated by an optical power limiter (1), which has nonlinear attenuation, **characterized in that** the power limiter contains carbon nanohorns and is arranged in the intermediate focus (35) between a first converging lens (31) and a second converging lens (32) of an optical apparatus.

12. Method according to claim 11, **characterized in that** carbon nanohorns (2) or aggregates of carbon nanohorns (2) are used in an area occupancy which, below the nonlinear threshold in the wavelength range between 400 nm and 800 nm, results in an average transmission of more than about 70% or more than about 80%.

13. Method according to any of claims 11 or 12, **characterized in that** the light is nonlinearly absorbed and/or scattered.

14. Method according to any of claims 11 to 13, **characterized in that** the power limiter (1) is destroyed when an optical energy of more than 1 J·cm⁻² arrives.

## Revendications

1. Appareil optique comprenant
au moins une première lentille convergente (31) et
au moins une deuxième lentille convergente (32) et
un limiteur de puissance optique (1) qui présente une atténuation non linéaire et qui contient des nano-cornets de carbone (2),
le limiteur de puissance optique (1) étant disposé dans un foyer intermédiaire (35) entre la première lentille (31) et la deuxième lentille (32).

2. Appareil optique selon la revendication 1,
**caractérisé en ce que** les nano-cornets de carbone (2) sont noyés dans un matériau porteur (3) qui est transparent dans au moins une partie du spectre électromagnétique, ou
**en ce que** les nano-cornets de carbone (2) sont appliqués sur un matériau porteur (3) qui est transparent dans au moins une partie du spectre électromagnétique.

3. Appareil optique selon la revendication 2,
**caractérisé en ce que** le matériau porteur (3) contient un polymère ou une matière thermodurcissable ou un verre ou un liquide, ou
**en ce que** le matériau porteur (3) contient du PMMA ou du polycarbonate ou du polyéther ou une résine synthétique ou de l'eau ou de l'acétone.

4. Appareil optique selon l'une des revendications 1 à 3,
**caractérisé en ce que** les nano-cornets de carbone (2) présentent une longueur d'environ 50 nm à environ 500 nm, et/ou
**en ce que** les nano-cornets de carbone (2) ont un diamètre d'environ 10 nm à environ 50 nm, ou
**en ce que** les nano-cornets de carbone (2) présentent une longueur d'environ 100 nm à environ 300 nm, et/ou
**en ce que** les nano-cornets de carbone (2) présentent un diamètre d'environ 15 nm à environ 30 nm.

5. Appareil optique selon l'une des revendications 1 à 4,
**caractérisé en ce que** les nano-cornets de carbone (2) ou des agrégats de nano-cornets de carbone (2) sont présents dans une occupation de surface qui provoque, en dessous du seuil non linéaire, dans la plage de longueurs d'onde entre 400 nm et 800 nm, une transmission moyenne de plus d'environ 70 % ou de plus d'environ 80 %.

6. Appareil optique selon l'une des revendications 1 à 5,
**caractérisé en ce que** le limiteur de puissance optique (1) contient en outre au moins un colorant et/ou des nanoparticules.

7. Appareil optique selon la revendication 6,
**caractérisé en ce que** le colorant est choisi parmi une ou plusieurs porphyrines et/ou phtalocyanines et/ou stilbènes, et/ou
**en ce que** les nanoparticules contiennent au moins un métal ou au moins un semi-conducteur, et/ou
**en ce que** les nanoparticules contiennent au moins de l'or et/ou de l'argent et/ou du cuivre et/ou de l'arséniure de gallium et/ou du séléniure de zinc.

8. Appareil optique selon l'une des revendications 1 à 7,
**caractérisé en ce que** le limiteur de puissance optique (1) présente, à une longueur d'onde de 532 nm, un seuil non linéaire d'environ 0,02 µJ à environ 2 µJ ou d'environ 0,03 µJ à environ 0,2 µJ ou d'environ 0,04 µJ à environ 0,1 µJ, lorsque le limiteur de puissance (1) est disposé dans le foyer intermédiaire (35) d'un système de lentilles (31, 32) ayant un nombre d'ouverture 5.

9. Appareil optique selon l'une des revendications 1 à 8,
**caractérisé en ce que** le limiteur de puissance optique (1) présente, à une longueur d'onde de 1064 nm, un seuil non linéaire d'environ 0,1 µJ à environ 10 µJ, ou de 0,15 µJ à environ 1 µJ, ou de 0,2 µJ à environ 05 µJ, lorsque le limiteur de puissance (1) est disposé dans le foyer intermédiaire (35) d'un système de lentilles (31, 32) ayant un nombre d'ouverture 5.

10. Appareil optique selon l'une des revendications 1 à 9,
**caractérisé en ce que** l'une au moins des lentilles (31, 32) est formée par un système de lentilles composé de plusieurs lentilles convergentes et/ou divergentes.

11. Procédé de limitation d'une puissance optique, dans lequel la lumière est atténuée par un limiteur de puissance optique (1) présentant une atténuation non linéaire,
**caractérisé en ce que** le limiteur de puissance comprend des nano-cornets de carbone et est disposé dans le foyer intermédiaire (35) entre une première lentille convergente (31) et une deuxième lentille convergente (32) d'un appareil optique.

12. Procédé selon la revendication 11,
**caractérisé en ce que** des nano-cornets de carbone (2) ou des agrégats de nano-cornets de carbone (2) sont utilisés dans une occupation de surface qui provoque, en dessous du seuil non linéaire, dans la plage de longueurs d'onde entre 400 nm et 800 nm, une transmission moyenne de plus d'environ 70 % ou de plus d'environ 80 %.

13. Procédé selon l'une des revendications 11 ou 12,
**caractérisé en ce que** la lumière est absorbée et/ou diffusée de manière non linéaire.

14. Procédé selon l'une des revendications 11 à 13,
**caractérisé en ce que** le limiteur de puissance (1) est détruit à l'arrivée d'une énergie optique de plus de 1 J·cm⁻².
